# EUROPEAN PATENT APPLICATION

(11) **EP 4 723 649 A1**
(43) Date of publication of application: **08.04.2026**
(21) Application number: 25204897.0
(22) Date of filing: 26.09.2025
(51) Int. Cl.: H04N 21/2343, H04N 7/015, H04N 21/4402

(54) **SYSTEMS, DEVICES, AND METHODS FOR ENCODING AND PLAYBACK OF HIGHER RESOLUTION DIGITAL CINEMA CONTENT**

(30) Priority: 27.09.2024 US 202418900539
(71) Applicant: GDC Technology Limited, North Point (HK)
(72) Inventor: KUMAR, Pranay, North Point (HK)
(74) Representative: J A Kemp LLP

(57) **Abstract**

Systems, devices, and methods for encoding and playback of higher resolution digital cinema content are disclosed. The disclosed systems, devices, and methods allow encoding, storage, transmission, and playback of higher resolution video files at frame rates such that the encoded video file can be processed by systems supporting lower resolution video.

## Description

### CROSS REFERENCE TO RELATED APPLICATIONS

This application claims benefit to U.S. Non-Provisional Application 18/900,539, filed, September 27, 2024, the disclosure of which are incorporated herein in their entirety.

### TECHNICAL FIELD

This disclosure generally relates to systems, devices, and methods for encoding and playback of higher resolution digital cinema content via a lower resolution pipeline.

### BACKGROUND

Motion pictures have existed for more than 125 years. In past decades, traditional film-based systems and workflows have been replaced by Digital Cinema Systems and standards. The digital cinema ecosystem is defined by, for example, the DCSS by the Digital Cinema Initiative LLC ("DCI"). This standard, along with the various standards it references, including various publications by Society and Motion Picture and Television Engineers ("SMPTE"), defines the behavior and capabilities of deployed hardware equipment, software solutions, and workflows serving the global motion picture industry.

The DCSS defined requirements for video quality and capabilities of products used in the digital cinema ecosystem, with requirements defined decades ago. Some of these requirements have remained unchanged since then. DCSS required support for video resolutions of 2K (*e.g*., 2048x1080) at 24 and 48 frames per second ("fps") and 4K (*e.g*., 4096x2160) at 48fps. While in updated versions of the DCSS, the DCI has tried to accommodate newer requirements of the industry and capabilities of technology, such as higher fps (up to 120fps) for video, the resolution support has not changed. At the same time, the advancement in image capture and display technologies make resolutions higher than 4K not only possible but also commercially viable. Display equipment available for home use has moved to support higher video resolution such as 8K (*e.g*., 8192x4320). There may be need for the digital cinema commercial industry to catch up to home display equipment.

While it is possible for DCI to define new standards that would accommodate higher resolution videos such as 8K resolution, several issues remain. Firstly, no such standards have been published, and it takes significant time for such standards to be vetted, agreed upon, and then implemented. Secondly, even if such standards are made available, the implementation would most likely exceed the capabilities of the currently deployed equipments. So, higher resolution video would likely not be used unless there is an upgrade or replacement of equipments in the entire ecosystem. Thirdly, upgrade and swap of equipments, softwares, and processes would be a very costly exercise, one that would hinder the adoption of higher resolution video in the digital cinema industry. A more cost-efficient method of displaying higher resolution digital cinema content is desired. Lastly, as technologies continue to advance, there may always be a need to display a resolution higher than what is defined in the standards.

### SUMMARY

Systems, devices, and methods for encoding and playback of higher resolution digital cinema content are disclosed. The disclosed systems, devices, and methods allow encoding, storage, transmission, and playback of higher resolution video files (*e.g.,* higher than 4K) at frame rates (*e.g*., standard frame rates) such that the encoded video file can be processed by systems supporting lower resolution video (*e.g.,* 4K or lower resolution).

In some embodiments, the method comprises receiving video content, such as video content configured to be presented at 8K resolution at 24fps. Encoding the video may comprise dividing a frame of the video content into subframes, and the subframes have a second resolution (*e.g.,* 4K) and are associated with a second frame rate (*e.g.,* 96fps). The first frame rate and the second frame rate are determined based on playlist metadata, such as metadata associated with a Digital Cinema Package ("DCP") Composition Playlist ("CPL"). For example, the first resolution is determined via the EditRate field, and the second frame rate is determined via the FrameRate field. The encoded video content may be decoded and presented at the higher resolution by assembling the subframes according to the playlist metadata.

By using the disclosed method and leveraging the playlist metadata that may be understood by existing cinema equipment, less software and equipment would need to be replaced to present digital cinema content at a higher resolution. For example, a device for decoding the encoded video (*e.g.,* as disclosed herein) and a higher resolution display (*e.g.,* an 8K display or projector) may be the only equipments that need to be replaced, reducing cost for displaying higher resolution digital cinema content and a need for redeveloping new industry requirements.

In some embodiments, a method comprises receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method further comprises transmitting the encoded video content. In some embodiments, said transmitting the encoded video content comprises transmitting the subframes. The method further comprises receiving the encoded video content. In some embodiments, said receiving the encoded video content comprises receiving the subframes. The method further comprises decoding the encoded video content. In some embodiments, said decoding the encoded frame comprises reassembling the subframes according to the playlist metadata. The method further comprises presenting the decoded video content at the first resolution.

In some embodiments, the first resolution is 8K and the second resolution is 4K.

In some embodiments, the first frame rate is 24fps and the second frame rate is 96fps.

In some embodiments, the playlist metadata is associated with a Digital Cinema Package Composition Playlist.

In some embodiments, the method further comprises decoding second encoded video content. Said presenting the decoded video content comprises presenting the decoded video content concurrently with said decoding the second encoded video content.

In some embodiments, the method further comprises storing the decoded video content. Said presenting the decoded video content comprises presenting the stored decoded video content.

In some embodiments, the method further comprises storing the encoded video content. Said decoding the encoded video content comprises decoding the stored encoded video content.

In some embodiments, each of the subframes comprises a quadrant of a corresponding frame.

In some embodiments, the subframes are transmitted according to an order, and the subframes are reassembled according to the order.

In some embodiments, the video content comprises two-dimensional content, and the predefined frame rate is the predefined edit rate multiplied by a factor, the factor being the first resolution divided by the second resolution.

In some embodiments, the video content comprises three-dimensional content, and the predefined frame rate is the predefined edit rate multiplied by a factor, the factor being two times the first resolution divided by the second resolution.

In some embodiments, the predefined frame rate corresponds to the second frame rate, and the predefined edit rate corresponds to the first frame rate.

In some embodiments, the method further comprises: compressing the subframes; and decompressing the received subframes. Said transmitting the subframes comprises transmitting the compressed subframes and said receiving the subframes comprises receiving the compressed subframes.

In some embodiments, a system comprises: a first electronic device configured to perform a method comprising: receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method performed by the first electronic device further comprises transmitting the encoded video content. In some embodiments, said transmitting the encoded video content comprises transmitting the subframes. In some embodiments, the system further comprises a second electronic device configured to perform a method comprising: receiving the encoded video content. In some embodiments, said receiving the encoded video content comprises receiving the subframes; and decoding the encoded video content. In some embodiments, said decoding the encoded frame comprises reassembling the subframes according to the playlist metadata. In some embodiments, the decoded video content is presented at the first resolution.

In some embodiments, the first resolution is 8K and the second resolution is 4K.

In some embodiments, the first frame rate is 24fps and the second frame rate is 96fps.

In some embodiments, the playlist metadata is associated with a Digital Cinema Package Composition Playlist.

In some embodiments, the second electronic device is further configured to decode second encoded video content. Said presenting the decoded video content comprises presenting the decoded video content concurrently with said decoding the second encoded video content.

In some embodiments, the predefined frame rate corresponds to the second frame rate, and the predefined edit rate corresponds to the first frame rate.

In some embodiments, the first electronic device is configured to perform any of the steps of the methods above.

In some embodiments, the second electronic device is configured to perform any of the steps of the methods above.

In some embodiments, a non-transitory computer-readable medium stores instructions that, when executed by one or more processors of one or more electronic devices, cause the one or more electronic devices to perform a method comprising: receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method further comprises transmitting the encoded video content. In some embodiments, said transmitting the encoded video content comprises transmitting the subframes; receiving the encoded video content. In some embodiments, said receiving the encoded video content comprises receiving the subframes; decoding the encoded video content. In some embodiments, said decoding the encoded frame comprises reassembling the subframes according to the playlist metadata; and presenting the decoded video content at the first resolution.

In some embodiments, the non-transitory computer-readable medium causes the one or more electronic devices to perform a method comprising any of the steps of the methods above.

The embodiments disclosed are only examples, and the scope of this disclosure is not limited to them. Particular embodiments may include all, some, or none of the components, elements, features, functions, operations, or steps of the embodiments disclosed above. Embodiments according to the invention are in particular disclosed in the attached claims directed to a method, a storage medium, a system and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subject-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

### BRIEF DESCRIPTION OF THE DRAWINGS

Figure 1 illustrates exemplary encoding a frame of higher resolution video content, according to embodiments of this disclosure.
Figure 2 illustrates exemplary encoding of higher resolution video content, according to embodiments of this disclosure.
Figure 3 illustrates an exemplary system for encoding and decoding of higher resolution video content, according to embodiments of this disclosure.
Figure 4 illustrates an exemplary method for encoding of higher resolution video content and decoding the encoded content, according to embodiments of this disclosure.
Figure 5 illustrates an exemplary computer system, according to embodiments of this disclosure.

### DETAILED DESCRIPTION

In the following description of embodiments, reference is made to the accompanying drawings which form a part hereof, and in which it is shown by way of illustration specific embodiments which can be practiced. It is to be understood that other embodiments can be also used and structural changes can be made without departing from the scope of the disclosed embodiments.

Systems, devices, and methods for encoding and playback of higher resolution digital cinema content are disclosed. The disclosed systems, devices, and methods allow encoding, storage, transmission, and playback of higher resolution video files (*e.g.,* higher than 4K) at frame rates (*e.g*., standard frame rates) such that the encoded video file can be processed by systems supporting lower resolution video (*e.g.,* 4K or lower resolution).

In some embodiments, the method comprises receiving video content, such as video content configured to be presented at 8K resolution at 24fps. Encoding the video may comprise dividing a frame of the video content into subframes, and the subframes have a second resolution (*e.g.,* 4K) and are associated with a second frame rate (*e.g.,* 96fps). The first frame rate and the second frame rate are determined based on playlist metadata, such as metadata associated with a Digital Cinema Package ("DCP") Composition Playlist ("CPL"). For example, the first resolution is determined via the EditRate field, and the second frame rate is determined via the FrameRate field. The encoded video content may be decoded and presented at the higher resolution by assembling the subframes according to the playlist metadata.

Using the disclosed method and leveraging the playlist metadata that may be understood by existing cinema equipment, less software and equipment would need to be replaced to present digital cinema content at a higher resolution. For example, a device for decoding the encoded video (*e.g.,* as disclosed herein) and a higher resolution display (*e.g.,* an 8K display or projector) may be the only equipments that need to be replaced, reducing cost for displaying higher resolution digital cinema content and a need for redeveloping new industry requirements.

Although some examples herein are described with respect to presenting 8K video at 24fps and encoding the video as a 4K subframes at 961ps, it should be appreciated that these resolutions and frame rates are exemplary, and that disclosed systems, devices, and methods may involve encoding other higher-resolution content as lower-resolution content, to reduce a need to replace all existing cinema equipments. Although some examples herein are described with respect to two electronic devices, it should be appreciated that the disclosed systems, devices, and methods may involve one device or more than two devices for encoding and decoding of higher-resolution content.

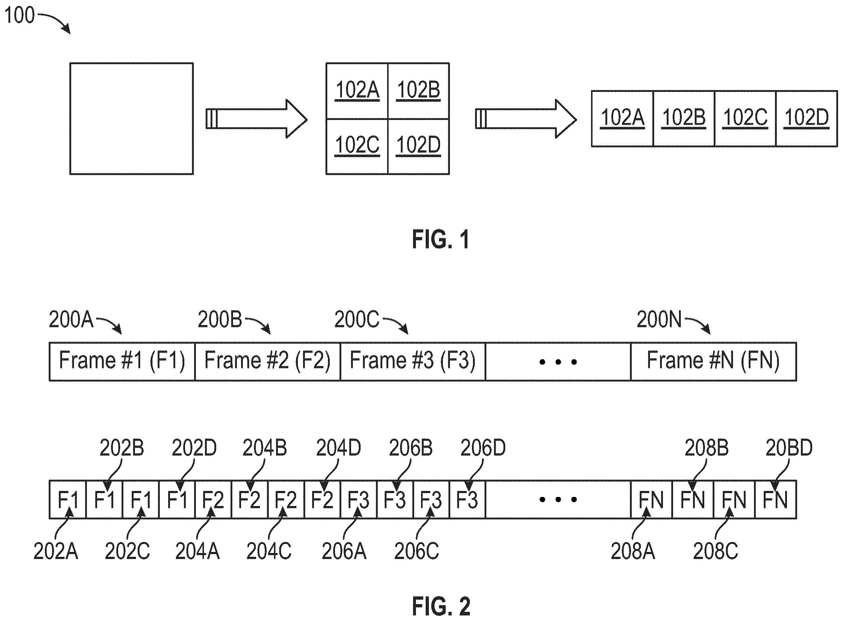

Figure 1 illustrates exemplary encoding of higher resolution content, according to embodiments of this disclosure. Figure 1 illustrates a frame 100. The frame may be a frame of video content, such as digital cinema video content. The video content may comprise a plurality of these frames, and each frame of the plurality of frames may be encoded and decoded as described herein. In some embodiments, the video content is configured to be presented at a first resolution and at a first frame rate, such as 8K resolution at 24fps. The frame 100 may have the first resolution.

In some instances, some cinema equipment may not be configured to process the frame and the video content at the first resolution. For example, available digital cinema equipment may not be configured to process video at 8K resolution, and no digital cinema standards have been published for content at 8K resolution. To allow presentation of the video content at the first resolution in these situations, the frame and the video content may be encoded and decoded as described herein.

In some embodiments, the video content is encoded. Encoding the video content may comprise dividing a frame into subframes. For example, as illustrated in Figure 1, the frame 100 is divided into subframes 102A-102D. In some embodiments, as illustrated, each quadrant of the frame corresponds to a subframe.

In some embodiments, the subframes have a second resolution and are associated with a second frame rate. In some embodiments, the second resolution is lower than the first resolution, and the second frame rate is higher than the first frame rate. The second resolution may be a resolution that available digital cinema equipment can process. The second frame rate may be a frame rate that available digital cinema equipment can process.

In some embodiments, the second frame rate is determined based on a ratio between the first resolution and the second resolution. For example, the first resolution is 8K resolution, the first frame rate is 24fps, the second resolution is 4K resolution, and the second frame rate is 96fps = 24fps x [(8192x4320)/(4096x2160)]. That is, in this example, the video content is configured to be presented at 8K resolution and 24fps, and the subframes have a 4K resolution and are configured to be communicated at 96fps.

In some embodiments, the subframes are ordered, such that they can be transmitted in a sequence according to this order. For example, as illustrated, the subframes may be ordered as follows: top left subframe (subframe 102A), top right subframe (subframe 102B), bottom left subframe (subframe 102C), and bottom right subframe (subframe 102D). After the subframes are determined, the subframes may be transmitted according to this order to a decoding device or component, as described in more detail herein. In some embodiments, the order is determined via the encoding device (*e.g.,* the encoding device receives automatically determined or user-determined metadata for defining subframe orders and subframe configurations). In some embodiments, the order is determined based on coordination between the encoding and the decoding devices (*e.g*., a pre-agreed implementation between a sender and a receiver).

In some embodiments, the subframes are compressed. For example, the subframes are compressed according to JPEG2000.

In some embodiments, the second resolution and the second frame rate are determined based on playlist metadata. The playlist metadata may be metadata that can be processed by available digital cinema equipment, allowing the equipment to process the encoded video content. The playlist metadata may configure the cinema equipment to present video content presentation. For example, the playlist metadata is associated with a Digital Cinema Package ("DCP") Composition Playlist ("CPL"). The second resolution and the second frame rate may be determined based on capability of the equipment (*e.g*., cinema equipment capable of processing content having 4K resolution or lower, equipment for receiving the encoded video content).

In some embodiments, the playlist metadata comprises a frame rate and an edit rate, which control how the cinema equipment processes and presents the video content. For example, the frame rate is a value of FrameRate in a CPL XML file, and the edit rate is a value of EditRate in a CPL XML file. The cinema equipment may be originally intended to present two-dimensional video content, such that the frame rate and the edit rate equal, and three-dimensional video content, such that frame rate is twice the edit rate.

In some embodiments, the relationships between the frame rate and the edit rate are different, allowing the cinema equipment (which was not originally intended to operate with these frame rates and edit rates) to process the subframes. In some embodiments, the frame rate of the playlist metadata corresponds to the second frame rate, and the edit rate of the playlist metadata corresponds to the first frame rate. Using the 8K video content example, the frame rate of the playlist metadata is 96, and the edit rate of the playlist metadata is 24. This would allow the cinema equipment (*e.i*g., equipment for receiving the encoded video content, such as subframes) to process the subframes and allow for presentation of video content at a higher resolution, which the equipment may not otherwise be capable of processing.

The frame rate and the edit rate may be predefined. For example, the frame rate and the edit rate may be defined based on the first resolution of the video content to be presented and the second resolution of the subframes. The frame rate and the edit rate may be defined manually or automatically, in accordance with resolution of the video content to be presented and capability of the cinema equipment for processing the encoded video content.

Advantageously, by leveraging metadata that can be processed by available cinema equipment (that otherwise cannot process data corresponding to a higher resolution), less software and equipment would need to be replaced to present digital cinema content at the higher resolution. For example, a device for decoding the encoded video (*e.g.,* as disclosed herein) and a higher resolution display (*e.g*., an 8K display or projector) may be the only equipments that need to be replaced, reducing cost for displaying higher resolution digital cinema content and a need for redeveloping new industry requirements.

In some embodiments, the video content comprises two-dimensional content, and the predefined frame rate is the predefined edit rate multiplied by a factor, the factor being the first resolution divided by the second resolution. For example, using the 8K video content example, the frame rate of the playlist metadata is 96, and the edit rate of the playlist metadata is 24.

In some embodiments, the video content comprises three-dimensional content, and the predefined frame rate is the predefined edit rate multiplied by a factor, the factor being two times the first resolution divided by the second resolution. For example, using the 8K video content example, the frame rate of the playlist metadata is 192, and the edit rate of the playlist metadata is 24. This is because three-dimensional content may comprise twice the number of frames, compared to two-dimensional content - one set of frames for the left eye and one set of frames for the right eye.

The examples described with respect to Figure 1 are exemplary. The illustrations of frame 100 and subframes 102A-102D are representative. It should be appreciated that the frame may have different resolutions and dimensions than described. It should be appreciated that the subframes may be divided differently than described. As an example, the frame may be divided into more subframes (*e.g.,* five or more subframes) or less subframes (*e.g.,* two subframes, three subframes) than described. As another example, the subframes within a frame may not be divided evenly and have different sizes. It should be appreciated that the relationships between the first resolution, the first frame rate, the second resolution, and the second frame rate may be different than described. It should be appreciated that the order of the subframes may be different than described. It should be appreciated that the illustrations do not suggest a specific temporal relationship between the subframes.

Figure 2 illustrates exemplary encoding of higher resolution content, according to embodiments of this disclosure. Figure 2 illustrates frames of video content over a duration of the video content. As illustrated, the frames comprise frames 200A-200N. For example, Figure 2 illustrates a one second duration of video content having 8K resolution and configured to be presented at 24fps. Therefore, in this example, N = 24.

In some embodiments, each of the frames 200A-200N comprises frame 100, and each of the frames 200A-200N may be encoded. Encoding the frames 200A-200N may comprise dividing each of the frames into respective subframes, as described with respect to Figure 1. For example, frame 200A may be divided into subframes 202A-202D, frame 200B may be divided into subframes 204A-204D, and so on. For instance, subframe 202A comprises subframe 102A, subframe 202B comprises subframe 102B, subframe 202C comprises subframe 102C, subframe 202D comprises subframe 102D, and so on.

For example, Figure 2 illustrates a one second duration of video content having 8K resolution and configured to be presented at 24fps. In this example, each of the frames 200A-200N has an 8K resolution, and each of the subframes has a 4K resolution and are configured to be communicated at 96fps. To initiate the pipeline in this example, the frame rate of the playlist metadata is set to be 96, and the edit rate of the playlist metadata is set to be 24.

The video content may be encoded and communicated sequentially as illustrated, creating an efficient pipeline for presenting the video content at a higher resolution that the equipment may otherwise be able to process.

The examples described with respect to Figure 2 are exemplary. The illustrations of frames 200A-200N and their corresponding subframes are representative. It should be appreciated that the frames may have different resolutions and dimensions than described. It should be appreciated that the subframes may be divided differently than described. As an example, the frame may be divided into more subframes (*e.g*., five or more subframes) or less subframes (*e.g*., two subframes, three subframes) than described. As another example, the subframes within a frame may not be divided evenly and have different sizes. It should be appreciated that the relationships between the first resolution, the first frame rate, the second resolution, and the second frame rate may be different than described. It should be appreciated that the order of the subframes may be different than described. It should be appreciated that the illustrations do not suggest a specific temporal relationship between the frames and a specific temporal relationship between the subframes.

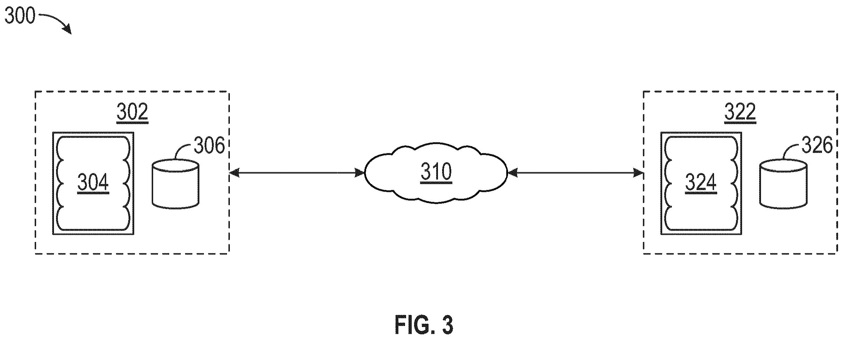

Figure 3 illustrates an exemplary system 300 for encoding and decoding of higher resolution content, according to embodiments of this disclosure. Figure 3 illustrates an exemplary system for performing the operations described herein. In some embodiments, the system 300 comprises first electronic device 302 and second electronic device 322. In some embodiments, the first electronic device 302 comprises one or more processors 304 and one or more memories 306 for performing the operations described herein, and the second electronic device 322 comprises one or more processors 324 and one or more memories 326 for performing the operations described herein.

In some embodiments, the first electronic device 302 comprises computer system 500, and the second electronic device 322 comprises computer system 500. In some embodiments, the first electronic device 302 and the second electronic device 322 are configured to communicate via network connection 310.

In some embodiments, the first electronic device 302 is an electronic device or an electronic device component for performing the video content encoding and transmitting operations described herein, and the second electronic device 322 is an electronic device or an electronic device component for performing the receiving and video decoding operations described herein. For example, the first electronic device 302 is a device of a post-production studio that created the video content, and the video content is configured to be distributed to cinemas presenting the video content. In some embodiments, the first electronic device 302 comprises a DCP packager, or the first electronic device 302 is configured to communicate with a DCP packager, such that the encoded video content is transmitted to the DCP packager prior to transmission to a receiver.

The second electronic device 322 may comprise a projector or a display (*e.g*., LED) comprising a digital cinema media player (*e.g*., called the media block by the DCSS). The second electronic device 322 may be an electronic device (*e.g.,* a DCI-compliant device) that provides content to the projector or display for presenting the video content.

For example, in some embodiments, the first electronic device 302 is configured to receive video content that is configured to be presented at a higher resolution (*e.g.,* 8K) and a first frame rate (*e.g.,* 24fps). The first electronic device 302 may be configured to encode the received video content, as described with respect to Figures 1 and 2. For example, the first electronic device 302 is configured to encode the video content by dividing a frame (*e.g.,* frame 100, frames described with respect to Figure 2) of the video content into subframes (*e.g.,* subframes 102A-102D, subframes described with respect to Figure 2), the subframes having a second resolution (*e.g.,* 4K) and are associated with a second frame rate (*e.g.,* 96fps), as described. The first electronic device 302 may encode the video content according to playlist metadata, for example, as described with respect to Figures 1 and 2. For instance, the first electronic device 302 may encode the video content according to FrameRate value (*e.g.,* 96) and EditRate value (*e.g.,* 24) of a CPL XML file.

In some embodiments, the first electronic device 302 is configured to transmit the encoded video content for decoding and presentation. For example, the first electronic device 302 may transmit the subframes (*e.g.,* subframes 102A-102D, subframes described with respect to Figure 2) to the second electronic device 322. In some embodiments, the first electronic device 302 transmits the subframes while the second electronic device 322 concurrently decode earlier-received subframes for presentation, for example, in a scenario when the video content is being streamed. In some embodiments, the first electronic device 302 transmits the subframes for compression while concurrently encoding new frames. In some embodiments, the first electronic device 302 transmits the subframes when the second electronic device 322 requests for part or an entirety of the video content, which allows the second electronic device 322 to decode the video content in real time or at a later time. As illustrated, the encoded video content (*e.g.,* subframes) may be transmitted via network 310. In some embodiments, the encoded video content is stored by the first electronic device 302 (*e.g.,* in one or more memories 306) transmitted at a later time.

In some embodiments, the first electronic device 302 is configured to compress the subframes prior to transmission, and the compressed subframes are transmitted to reduce the size of files being transmitted. For example, the first electronic device 302 comprises a compressor, and the subframes are compressed according to JPEG2000.

In some embodiments, the second electronic device 322 is configured to receive the encoded video content (*e.g.,* subframes transmitted from the first electronic device 302). In some embodiments, the second electronic device 322 is configured to decode the encoded video content. The second electronic device 322 may be configured to decode by reassembling the subframes according to the playlist metadata (*e.g.,* according to the frame rate and the edit rate, as described above).

In some embodiments, the received subframes are compressed, and the second electronic device 322 is configured to decompress the received subframes. For example, the second electronic device 322 comprises a decompressor, and the received subframes are decompressed according to JPEG2000.

For example, the subframes are reassembled according to an order being transmitted. Using Figure 1 as an example, the subframes are transmitted in the following order: top left subframe 102A, top right subframe 102B, bottom left subframe 102C, and bottom right subframe 102D. The second electronic device 322 would reassemble the subframes according to this order to generate the video content for presentation. That is, the second electronic device 322 would reassemble the original frame by placing the first received subframe of a set of subframes on the top left portion of the frame, the second received subframe of the set of subframes on the top right portion of the frame, the third received subframe of the set of subframes on the bottom left portion of the frame, and the fourth received subframe of the set of subframes on the bottom right portion of the frame. Because the subframes have the second resolution (*e.g.,* 4K) and are communicated according to the second frame rate (*e.g.,* 96fps), the reassembled video would be have the first resolution (*e.g.,* 8K) and presented at the first frame rate (*e.g.,* 24fps).

Using Figure 2 as an example, subsequent subframes corresponding to subsequent frames would be received and decoded similarly as described above. For example, frame 200A is encoded by first electronic device 302 and subframes 202A-202D are transmitted by the first electronic device 302. Second electronic device 322 receives the subframes 202A-202D and decode as described above. Frame 200B is encoded by first electronic device 302 and subframes 204A-204D are transmitted by the first electronic device 302. Second electronic device 322 receives the subframes 204A-204D, decode as described above, and so on.

In some embodiments, the decoded video content (*e.g.,* comprising frames comprising the reassembled subframes) is configured to be presented. For example, the second electronic device 322 is configured to transmit the decoded video content for presentation via a display output device that can present the video content at the first resolution (*e.g.,* a cinema display, a cinema projector capable of presentation at 8K, a projector with a digital cinema player, a display (*e.g.,* LED) with a digital cinema player, a DCSS media block). As another example, the second electronic device 322 comprises the display output device that can present the video content at the first resolution.

In some embodiments, the second electronic device 322 is configured to decode the later-received encoded video content concurrently with the presentation of the earlier-decoded video content, for example, in a scenario when the video content is being streamed. In some embodiments, the second electronic device 322 is configured to store the decoded video content (*e.g.,* in one or more memories 326), and the stored decoded video content may be used for presentation, for example, at a later time.

In some instances, the first electronic device 302 and/or the second electronic device 322 may comprise components that cannot process data associated with the first resolution (*e.g.,* 8K), but can process data associated with the second resolution (*e.g.,* 4K or lower). Advantageously, by performing the disclosed operations and leveraging metadata that can be processed by available cinema equipment (that otherwise cannot process data corresponding to a higher resolution), less software and equipment would need to be replaced to present digital cinema content at the higher resolution. For example, a component or device for decoding the encoded video and a higher resolution display (*e.g.,* an 8K display or projector) may be the only equipments that need to be replaced, reducing cost for displaying higher resolution digital cinema content and a need for redeveloping new industry requirements.

Although Figure 3 illustrates first electronic device 302 and second electronic device 322 communicating via network connection 310, it should be appreciated that the first and second electronic devices may communicate via connections different than described. For example, as described herein, the encoded video content may be stored via, *e.g.,* hard disks, and the stored encoded video content may be sent to the receiver. As another example, the first electronic device 302 and the second electronic device 322 may communicate via a satellite connection or any other means of communicating data. As another example, the network connection 310 may comprise devices and/or software associated with the disclosed pipeline. For instance, a theater management system (TMS) may communicate with the first electronic device and the second electronic device for communicating the data (*e.g.,* encoded video content) disclosed herein. The TMS may be a system configured to direct video content to an appropriate receiver, for example, according to demands and showtimes.

Furthermore, it should be appreciated that the first electronic device 302 and the second electronic device 322 may be two different devices or part of a same device. It should be appreciated that the first electronic device 302 and the second electronic device 322 may represent more than two different devices.

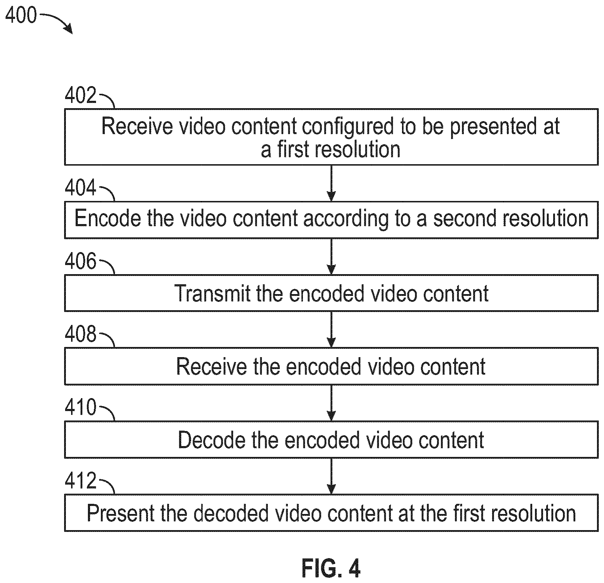

Figure 4 illustrates an exemplary method 400 for encoding of higher resolution content and decoding the encoded content, according to embodiments of this disclosure. In some embodiments, the steps of method 400 are performed by one or more components described with respect to Figures 1-3 and/or components of system 500. It should be appreciated that steps described with respect to Figure 4 are exemplary. The method 400 may include fewer steps, additional steps, or different order of steps than described. It is appreciated that the steps of method 400 leverage the features and advantages described with respect to Figures 1-3.

In some embodiments, the method 400 comprises receiving video content (step 402). In some embodiments, the video content configured to be presented at a first resolution and a first frame rate. For example, as described with respect to Figures 1-3, video content comprising frame 100 or frames 200A-200N is received, for instance, by first electronic device 302.

In some embodiments, the method 400 comprises encoding the video content (step 404). For example, as described with respect to Figures 1-3, the received video content is encoded, for instance, by first electronic device 302. In some embodiments, the encoding of the video content comprises dividing a frame of the video content into subframes. For example, as described with respect to Figures 1-3, the frame 100 is divided into subframes 102A-102D, and each of the frames 200A-200N is divided into their respective subframes.

In some embodiments, the subframes have a second resolution and are associated with a second frame rate, the second resolution is lower than the first resolution, and the second frame rate is higher than the first frame rate. For example, the first resolution is 8K and the second resolution is 4K, and the first frame rate is 24fps and the second frame rate is 96fps.

In some embodiments, each of the subframes comprises a quadrant of a corresponding frame. For example, as described with respect to Figures 1-3, each of subframes 102A-102D corresponds to a quadrant of frame 100, and each of subframes 202A-202D, 204A-204D, etc. corresponds to a quadrant of a corresponding frame 200A, 200B, etc.

In some embodiments, the subframes are transmitted according to an order. For example, each of subframes 102A-102D and each of subframes 202A-202D, 204A-204D, etc. are transmitted according to the order as described with respect to Figures 1-3.

In some embodiments, the second resolution and the second frame rate are determined based on playlist metadata. For example, the playlist metadata is associated with a Digital Cinema Package Composition Playlist.

In some embodiments, the playlist metadata is for configuring video content presentation at the second resolution based on a predefined frame rate and a predefined edit rate, and the predefined frame rate and the predefined edit rate are different. For example, the predefined frame rate corresponds to the second frame rate (*e.g.,* 96, as described with respect to Figures 1-3) of the subframes, and the predefined edit rate corresponds to the first frame rate (*e.g.,* 24, as described with respect to Figures 1-3) of the video content.

In some embodiments, the method 400 comprises transmitting the encoded video content (step 406). In some embodiments, transmitting the encoded video content comprises transmitting the subframes. For example, as described with respect to Figures 1-3, the subframes are transmitted, for instance, by first electronic device 302.

In some embodiments, the method 400 comprises compressing the subframes, and transmitting the subframes comprises transmitting the compressed subframes. For example, as described with respect to Figures 1-3, the subframes are compressed (*e.g.,* according to JPEG2000) prior to transmission, for instance, by first electronic device 302.

In some embodiments, the method 400 comprises receiving the encoded video content (step 408). In some embodiments, receiving the encoded video content comprises receiving the subframes. For example, as described with respect to Figures 1-3, the subframes are received, for instance, by second electronic device 322.

In some embodiments, the method 400 comprises decompressing the received subframes, and receiving the subframes comprises decompressing the compressed subframes. For example, as described with respect to Figures 1-3, the received subframes are decompressed (*e.g.,* according to JPEG2000) prior to transmission, for instance, by second electronic device 322.

In some embodiments, the method 400 comprises decoding the encoded video content (step 410). For example, as described with respect to Figures 1-3, the subframes are decoded, for instance, by second electronic device 322. In some embodiments, the decoding of the encoded frame comprises reassembling the subframes according to the playlist metadata. For example, as described with respect to Figures 1-3, the subframes are assembled according to the frame rate and the edit rate, for instance, by second electronic device 322.

In some embodiments, the subframes are reassembled according to an order associated with the transmission of the subframes. For example, as described with respect to Figures 1-3, the subframes are assembled according to the order received. Using Figure 1 as a specific example, the subframes are transmitted in the following order: top left subframe 102A, top right subframe 102B, bottom left subframe 102C, and bottom right subframe 102D. The second electronic device 322 would reassemble the subframes according to this order to generate the video content for presentation.

In some embodiments, the method 400 comprises presenting the decoded video content at the first resolution (step 412). For example, as described with respect to Figures 1-3, the decoded video content is presented via a display output device at the first resolution (*e.g.,* a cinema display, a cinema projector capable of presentation at 8K, a projector with a digital cinema player, a display (*e.g.,* LED) with a digital cinema player, a DCSS media block).

In some embodiments, the method 400 further comprises decoding second encoded video content. The presenting of the decoded video content comprises presenting the decoded video content concurrently with said decoding the second encoded video content. For example, as described with respect to Figures 1-3, later-received encoded video content is decoded concurrently with the presentation of the earlier-decoded video content, for example, in a scenario when the video content is being streamed.

In some embodiments, the method 400 further comprises storing the decoded video content. The presenting of the decoded video content comprises presenting the stored decoded video content. For example, as described with respect to Figures 1-3, the decoded video content may be stored and used for presentation at a later time.

In some embodiments, the method 400 further comprises storing the encoded video content. The decoding of the encoded video content comprises decoding the stored encoded video content. For example, as described with respect to Figures 1-3, the encoded video content may be stored and used for decoding at a later time.

In some embodiments, the video content comprises two-dimensional content, and the predefined frame rate is the predefined edit rate multiplied by a factor, the factor being the first resolution divided by the second resolution. For example, as described with respect to Figures 1-3 and using the 8K video content example, the frame rate of the playlist metadata is 96, and the edit rate of the playlist metadata is 24 for two-dimensional content configured to be presented at 24fps.

In some embodiments, the video content comprises three-dimensional content, and the predefined frame rate is the predefined edit rate multiplied by a factor, the factor being two times the first resolution divided by the second resolution. For example, as described with respect to Figures 1-3 and using the 8K video content example, the frame rate of the playlist metadata is 192, and the edit rate of the playlist metadata is 24 for three-dimensional content configured to be presented at 24fps.

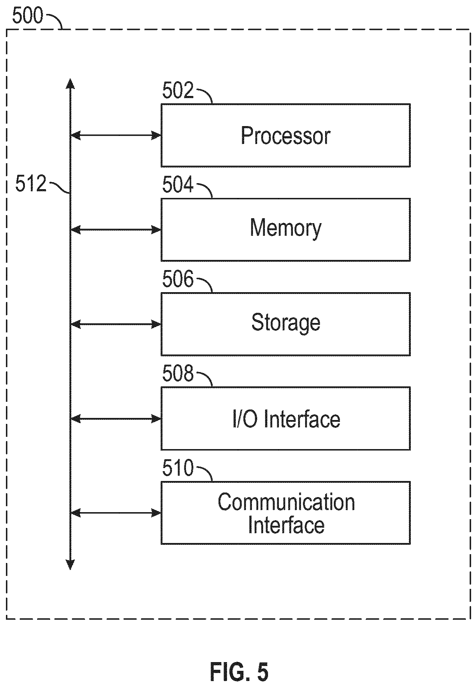

Figure 5 illustrates an example computer system 500. In some embodiments, the computer system 500 is configured to perform one or more steps of the content encoding, transmission, decoding, and playback methods disclosed herein. In particular embodiments, one or more computer systems 500 perform one or more steps of one or more methods described or illustrated herein. In particular embodiments, one or more computer systems 500 provide functionality described or illustrated herein. In particular embodiments, software running on one or more computer systems 500 performs one or more steps of one or more methods described or illustrated herein or provides functionality described or illustrated herein. Particular embodiments include one or more portions of one or more computer systems 500. Herein, reference to a computer system may encompass a computing device, and vice versa, where appropriate. Moreover, reference to a computer system may encompass one or more computer systems, where appropriate.

In some embodiments, the computer system 500 example of an electronic device (*e.g.,* electronic device 302, electronic device 304, an electronic device performing operations of electronic device 302 and/or electronic device 304) that can be used for encoding, transmission, decoding, and playback of content, as disclosed herein. The computing device 500 may be, but not limited to, a work station, server, desktop computer, laptop computer, tablet computer, personal data assistant (PDA), smart phone, in-vehicle computer, or a combination thereof.

This disclosure contemplates any suitable number of computer systems 500. This disclosure contemplates computer system 500 taking any suitable physical form. As examples and not by way of limitation, computer system 500 may be an embedded computer system, a system-on-chip (SOC), a single-board computer system (SBC) (such as, for example, a computer-on-module (COM) or system-on-module (SOM)), a desktop computer system, a laptop or notebook computer system, an interactive kiosk, a mainframe, a mesh of computer systems, a mobile telephone, a personal digital assistant (PDA), a server, a tablet computer system, or a combination of two or more of these. Where appropriate, computer system 500 may include one or more computer systems 500; be unitary or distributed; span multiple locations; span multiple machines; span multiple data centers; or reside in a cloud, which may include one or more cloud components in one or more networks. Where appropriate, one or more computer systems 500 may perform without substantial spatial or temporal limitation one or more steps of one or more methods described or illustrated herein. As an example and not by way of limitation, one or more computer systems 500 may perform in real time or in batch mode one or more steps of one or more methods described or illustrated herein. One or more computer systems 500 may perform at different times or at different locations one or more steps of one or more methods described or illustrated herein, where appropriate.

In particular embodiments, computer system 500 includes a processor 502, memory 504, storage 506, an input/output (I/O) interface 508, a communication interface 510, and a bus 512. Although this disclosure describes and illustrates a particular computer system having a particular number of particular components in a particular arrangement, this disclosure contemplates any suitable computer system having any suitable number of any suitable components in any suitable arrangement.

In some embodiments, the bus 512 includes, but is not limited to, Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus, and the like.

In particular embodiments, processor 502 includes hardware for executing instructions, such as those making up a computer program. As an example and not by way of limitation, to execute instructions, processor 502 may retrieve (or fetch) the instructions from an internal register, an internal cache, memory 504, or storage 506; decode and execute them; and then write one or more results to an internal register, an internal cache, memory 504, or storage 506. In particular embodiments, processor 502 may include one or more internal caches for data, instructions, or addresses. This disclosure contemplates processor 502 including any suitable number of any suitable internal caches, where appropriate. As an example and not by way of limitation, processor 502 may include one or more instruction caches, one or more data caches, and one or more translation lookaside buffers (TLBs). Instructions in the instruction caches may be copies of instructions in memory 504 or storage 506, and the instruction caches may speed up retrieval of those instructions by processor 502. Data in the data caches may be copies of data in memory 504 or storage 506 for instructions executing at processor 502 to operate on; the results of previous instructions executed at processor 502 for access by subsequent instructions executing at processor 502 or for writing to memory 504 or storage 506; or other suitable data. The data caches may speed up read or write operations by processor 502. The TLBs may speed up virtual-address translation for processor 502. In particular embodiments, processor 502 may include one or more internal registers for data, instructions, or addresses. This disclosure contemplates processor 502 including any suitable number of any suitable internal registers, where appropriate. Where appropriate, processor 502 may include one or more arithmetic logic units (ALUs); be a multi-core processor; or include one or more processors 502. Although this disclosure describes and illustrates a particular processor, this disclosure contemplates any suitable processor.

In some embodiments, the one or more processors 304 comprise the one or more processors 502. In some embodiments, the one or more processors 324 comprise the one or more processors 502.

In particular embodiments, memory 504 includes main memory for storing instructions (*e.g.,* instructions for performing operations described herein) for processor 502 to execute or data for processor 502 to operate on. As an example and not by way of limitation, computer system 500 may load instructions from storage 506 or another source (such as, for example, another computer system 500) to memory 504. Processor 502 may then load the instructions from memory 504 to an internal register or internal cache. To execute the instructions, processor 502 may retrieve the instructions from the internal register or internal cache and decode them. During or after execution of the instructions, processor 502 may write one or more results (which may be intermediate or final results) to the internal register or internal cache. Processor 502 may then write one or more of those results to memory 504. In particular embodiments, processor 502 executes only instructions in one or more internal registers or internal caches or in memory 504 (as opposed to storage 506 or elsewhere) and operates only on data in one or more internal registers or internal caches or in memory 504 (as opposed to storage 506 or elsewhere). One or more memory buses (which may each include an address bus and a data bus) may couple processor 502 to memory 504. Bus 512 may include one or more memory buses, as described below. In particular embodiments, one or more memory management units (MMUs) reside between processor 502 and memory 504 and facilitate accesses to memory 504 requested by processor 502. In particular embodiments, memory 504 includes random access memory (RAM). This RAM may be volatile memory, where appropriate, this RAM may be dynamic RAM (DRAM) or static RAM (SRAM). Moreover, where appropriate, this RAM may be single-ported or multi-ported RAM. This disclosure contemplates any suitable RAM. Memory 504 may include one or more memories 504, where appropriate. Although this disclosure describes and illustrates particular memory, this disclosure contemplates any suitable memory.

In some embodiments, the one or more memories 306 comprise the memory 504. In some embodiments, the one or more memories 326 comprise the memory 504.

In particular embodiments, storage 506 includes mass storage for data or instructions. As an example and not by way of limitation, storage 506 may include a hard disk drive (HDD), a floppy disk drive, flash memory, an optical disc, a magneto-optical disc, magnetic tape, or a Universal Serial Bus (USB) drive or a combination of two or more of these. Storage 506 may include removable or non-removable (or fixed) media, where appropriate. Storage 506 may be internal or external to computer system 500, where appropriate. In particular embodiments, storage 506 is non-volatile, solid-state memory. In particular embodiments, storage 506 includes read-only memory (ROM). Where appropriate, this ROM may be mask-programmed ROM, programmable ROM (PROM), erasable PROM (EPROM), electrically erasable PROM (EEPROM), electrically alterable ROM (EAROM), or flash memory or a combination of two or more of these. This disclosure contemplates mass storage 506 taking any suitable physical form. Storage 506 may include one or more storage control units facilitating communication between processor 502 and storage 506, where appropriate. Where appropriate, storage 506 may include one or more storages 506. Although this disclosure describes and illustrates particular storage, this disclosure contemplates any suitable storage.

In some embodiments, the one or more memories 306 comprise the storage 506. In some embodiments, the one or more memories 326 comprise the storage 506.

In particular embodiments, I/O interface 508 includes hardware, software, or both, providing one or more interfaces for communication between computer system 500 and one or more I/O devices. Computer system 500 may include one or more of these I/O devices, where appropriate. One or more of these I/O devices may enable communication between a person and computer system 500. As an example and not by way of limitation, an I/O device may include a keyboard, keypad, microphone, monitor, mouse, printer, scanner, speaker, still camera, stylus, tablet, touch screen, trackball, video camera, sensors, markers, magnetic detectors, another suitable I/O device or a combination of two or more of these. An I/O device may include one or more sensors. This disclosure contemplates any suitable I/O devices and any suitable I/O interfaces 508 for them. Where appropriate, I/O interface 508 may include one or more devices or software drivers enabling processor 502 to drive one or more of these I/O devices. I/O interface 508 may include one or more I/O interfaces 508, where appropriate. Although this disclosure describes and illustrates a particular I/O interface, this disclosure contemplates any suitable I/O interface.

In particular embodiments, communication interface 510 includes hardware, software, or both providing one or more interfaces for communication (such as, for example, packet-based communication) between computer system 500 and one or more other computer systems 500 or one or more networks. As an example and not by way of limitation, communication interface 510 may include a network interface controller (NIC) or network adapter for communicating with an Ethernet or other wire-based network or a wireless NIC (WNIC) or wireless adapter for communicating with a wireless network, such as a WI-FI network. This disclosure contemplates any suitable network and any suitable communication interface 510 for it. As an example and not by way of limitation, computer system 500 may communicate with an ad hoc network, a personal area network (PAN), a local area network (LAN), a wide area network (WAN), a metropolitan area network (MAN), or one or more portions of the Internet or a combination of two or more of these. One or more portions of one or more of these networks may be wired or wireless. As an example, computer system 500 may communicate with a wireless PAN (WPAN) (such as, for example, a BLUETOOTH WPAN), a WI-FI network, a WI-MAX network, a cellular telephone network (such as, for example, a Global System for Mobile Communications (GSM) network), or other suitable wireless network or a combination of two or more of these. Computer system 500 may include any suitable communication interface 510 for any of these networks, where appropriate. Communication interface 510 may include one or more communication interfaces 510, where appropriate. Although this disclosure describes and illustrates a particular communication interface, this disclosure contemplates any suitable communication interface.

In particular embodiments, bus 512 includes hardware, software, or both coupling components of computer system 500 to each other. As an example and not by way of limitation, bus 512 may include an Accelerated Graphics Port (AGP) or other graphics bus, an Enhanced Industry Standard Architecture (EISA) bus, a front-side bus (FSB), a HYPERTRANSPORT (HT) interconnect, an Industry Standard Architecture (ISA) bus, an INFINIBAND interconnect, a low-pin-count (LPC) bus, a memory bus, a Micro Channel Architecture (MCA) bus, a Peripheral Component Interconnect (PCI) bus, a PCI-Express (PCIe) bus, a serial advanced technology attachment (SATA) bus, a Video Electronics Standards Association local (VLB) bus, or another suitable bus or a combination of two or more of these. Bus 512 may include one or more buses 512, where appropriate. Although this disclosure describes and illustrates a particular bus, this disclosure contemplates any suitable bus or interconnect.

Herein, a computer-readable non-transitory storage medium or media may include one or more semiconductor-based or other integrated circuits (ICs) (such, as for example, field-programmable gate arrays (FPGAs) or application-specific ICs (ASICs)), hard disk drives (HDDs), hybrid hard drives (HHDs), optical discs, optical disc drives (ODDs), magneto-optical discs, magneto-optical drives, floppy diskettes, floppy disk drives (FDDs), magnetic tapes, solid-state drives (SSDs), RAM-drives, SECURE DIGITAL cards or drives, any other suitable computer-readable non-transitory storage media, or any suitable combination of two or more of these, where appropriate. A computer-readable non-transitory storage medium may be volatile, non-volatile, or a combination of volatile and non-volatile, where appropriate.

In some embodiments, a non-transitory computer readable storage medium stores one or more programs, and the one or more programs includes instructions. When the instructions are executed by one or more electronic devices (*e.g.,* first electronic device 302, second electronic device 322, computer system 500) with one or more processors and memory, the instructions cause the electronic device to perform the methods described with respect to Figures 1-4.

In some embodiments, a method comprises receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method further comprises transmitting the encoded video content. In some embodiments, said transmitting the encoded video content comprises transmitting the subframes. The method further comprises receiving the encoded video content. In some embodiments, said receiving the encoded video content comprises receiving the subframes. The method further comprises decoding the encoded video content. In some embodiments, said decoding the encoded frame comprises reassembling the subframes according to the playlist metadata. The method further comprises presenting the decoded video content at the first resolution.

In some embodiments, the first resolution is 8K and the second resolution is 4K.

In some embodiments, the first frame rate is 24fps and the second frame rate is 96fps.

In some embodiments, the playlist metadata is associated with a Digital Cinema Package Composition Playlist.

In some embodiments, the method further comprises decoding second encoded video content. Said presenting the decoded video content comprises presenting the decoded video content concurrently with said decoding the second encoded video content.

In some embodiments, the method further comprises storing the decoded video content. Said presenting the decoded video content comprises presenting the stored decoded video content.

In some embodiments, the method further comprises storing the encoded video content. Said decoding the encoded video content comprises decoding the stored encoded video content.

In some embodiments, each of the subframes comprises a quadrant of a corresponding frame.

In some embodiments, the subframes are transmitted according to an order, and the subframes are reassembled according to the order.

In some embodiments, the video content comprises two-dimensional content, and the predefined frame rate is the predefined edit rate multiplied by a factor, the factor being the first resolution divided by the second resolution.

In some embodiments, the video content comprises three-dimensional content, and the predefined frame rate is the predefined edit rate multiplied by a factor, the factor being two times the first resolution divided by the second resolution.

In some embodiments, the predefined frame rate corresponds to the second frame rate, and the predefined edit rate corresponds to the first frame rate.

In some embodiments, the method further comprises: compressing the subframes; and decompressing the received subframes. Said transmitting the subframes comprises transmitting the compressed subframes and said receiving the subframes comprises receiving the compressed subframes.

In some embodiments, a system comprises: a first electronic device configured to perform a method comprising: receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method performed by the first electronic device further comprises transmitting the encoded video content. In some embodiments, said transmitting the encoded video content comprises transmitting the subframes. In some embodiments, the system further comprises a second electronic device configured to perform a method comprising: receiving the encoded video content. In some embodiments, said receiving the encoded video content comprises receiving the subframes; and decoding the encoded video content. In some embodiments, said decoding the encoded frame comprises reassembling the subframes according to the playlist metadata. In some embodiments, the decoded video content is presented at the first resolution.

In some embodiments, the first resolution is 8K and the second resolution is 4K.

In some embodiments, the first frame rate is 24fps and the second frame rate is 96fps.

In some embodiments, the playlist metadata is associated with a Digital Cinema Package Composition Playlist.

In some embodiments, the second electronic device is further configured to decode second encoded video content. Said presenting the decoded video content comprises presenting the decoded video content concurrently with said decoding the second encoded video content.

In some embodiments, the predefined frame rate corresponds to the second frame rate, and the predefined edit rate corresponds to the first frame rate.

In some embodiments, the first electronic device is configured to perform any of the steps of the methods above.

In some embodiments, the second electronic device is configured to perform any of the steps of the methods above.

In some embodiments, a non-transitory computer-readable medium stores instructions that, when executed by one or more processors of one or more electronic devices, cause the one or more electronic devices to perform a method comprising: receiving video content, the video content configured to be presented at a first resolution and a first frame rate; encoding the video content. In some embodiments, said encoding the video content comprises dividing a frame of the video content into subframes, the subframes have a second resolution and are associated with a second frame rate, the second resolution is lower than the first resolution, the second frame rate is higher than the first frame rate, and the second resolution and the second frame rate are determined based on playlist metadata. In some embodiments, the playlist metadata is for configuring video content presentation at the second resolution based on a predefined frame rate and a predefined edit rate, and the predefined frame rate and the predefined edit rate are different. The method further comprises transmitting the encoded video content. In some embodiments, said transmitting the encoded video content comprises transmitting the subframes; receiving the encoded video content. In some embodiments, said receiving the encoded video content comprises receiving the subframes; decoding the encoded video content. In some embodiments, said decoding the encoded frame comprises reassembling the subframes according to the playlist metadata; and presenting the decoded video content at the first resolution.

In some embodiments, the non-transitory computer-readable medium causes the one or more electronic devices to perform a method comprising any of the steps of the methods above.

Those skilled in the art will recognize that the systems described herein are representative, and any deviations from the explicilty disclosed embodiments are within the scope of the disclosure.

Although the disclosed embodiments have been fully described with reference to the accompanying drawings, it is to be noted that various changes and modifications will become apparent to those skilled in the art. Such changes and modifications are to be understood as being included within the scope of the disclosed embodiments as defined by the appended claims.

The terminology used in the description of the various described embodiments herein is for the purpose of describing particular embodiments only and is not intended to be limitative. As used in the description of the various described embodiments and the appended claims, the singular forms "a", "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, integers, steps, operations, elements, and/or components, but do not preclude the presence or addition of one or more other features, integers, steps, operations, elements, components, and/or groups thereof.

## Claims

1. A method comprising:
receiving video content, the video content configured to be presented at a first resolution and a first frame rate;
encoding the video content, wherein:
said encoding the video content comprises dividing a frame of the video content into subframes,
the subframes have a second resolution and are associated with a second frame rate,
the second resolution is lower than the first resolution,
the second frame rate is higher than the first frame rate, and
the second resolution and the second frame rate are determined based on playlist metadata, wherein:
the playlist metadata is for configuring video content presentation at the second resolution based on a predefined frame rate and a predefined edit rate, and
the predefined frame rate and the predefined edit rate are different;
transmitting the encoded video content, wherein said transmitting the encoded video content comprises transmitting the subframes;
receiving the encoded video content, wherein said receiving the encoded video content comprises receiving the subframes;
decoding the encoded video content, wherein said decoding the encoded frame comprises reassembling the subframes according to the playlist metadata; and
presenting the decoded video content at the first resolution.

2. The method of claim 1, wherein the first resolution is 8K and the second resolution is 4K.

3. The method of claim 1, wherein the first frame rate is 24fps and the second frame rate is 96fps.

4. The method of claim 1, wherein the playlist metadata is associated with a Digital Cinema Package Composition Playlist.

5. The method of claim 1, further comprising decoding second encoded video content, wherein said presenting the decoded video content comprises presenting the decoded video content concurrently with said decoding the second encoded video content.

6. The method of claim 1, further comprising storing the decoded video content, wherein said presenting the decoded video content comprises presenting the stored decoded video content.

7. The method of claim 1, further comprising storing the encoded video content, wherein said decoding the encoded video content comprises decoding the stored encoded video content.

8. The method of claim 1, wherein each of the subframes comprises a quadrant of a corresponding frame.

9. The method of claim 1, wherein:
the subframes are transmitted according to an order, and
the subframes are reassembled according to the order.

10. The method of claim 1, wherein:
the video content comprises two-dimensional content, and
the predefined frame rate is the predefined edit rate multiplied by a factor, the factor being the first resolution divided by the second resolution.

11. The method of claim 1, wherein:
the video content comprises three-dimensional content, and
the predefined frame rate is the predefined edit rate multiplied by a factor, the factor being two times the first resolution divided by the second resolution.

12. The method of claim 1, wherein:
the predefined frame rate corresponds to the second frame rate, and
the predefined edit rate corresponds to the first frame rate.

13. The method of claim 1, further comprising:
compressing the subframes; and
decompressing the received subframes, wherein:
said transmitting the subframes comprises transmitting the compressed subframes, and
said receiving the subframes comprises receiving the compressed subframes.

14. A system comprising a first and second electronic device configured to perform the method of any one of claims 1 to 13, wherein the first electronic device transmits the encoded video content, and the second electronic device receives the encoded video content.

15. A computer program comprising instructions that, when executed by one or more processors of two or more electronic devices, cause the two or more electronic devices to perform the method of any one of claims 1 to 13.
